# NOUVEAU FASCICULE DE BREVET EUROPEEN

(11) **EP 0 925 978 B2**
(45) Date de publication et mention de la décision concernant l'opposition: **19.12.2007**
(45) Mention de la délivrance du brevet: 19.03.2003
(21) Numéro de dépôt: 97403123.9
(22) Date de dépôt: 22.12.1997
(51) Int. Cl.: B60J 10/12, B60J 10/00

(54) **Système d'étanchéité pour vitrage mobile**
Dichtungssystem für bewegliches Fenster
Sealing system for movable window

(43) Date de publication de la demande: 30.06.1999
(73) Titulaire: SAINT-GOBAIN GLASS FRANCE, 92400 Courbevoie (FR)
(72) Inventeur: Bureau, Bernard, 60490 Marqueglise (FR); Kleo, Christophe, 60170 Ribecourt-Dreslincourt (FR); Huchet, Gérard, 02600 Retheuil (FR)
(74) Mandataire: Muller, René

(56) Documents cités:
- EP-A- 0 716 960
- DE-A- 3 441 719
- DE-C- 3 840 491
- FR-A- 2 577 483
- US-A- 4 736 981
- PATENT ABSTRACTS OF JAPAN vol. 8, no. 61 (M-284) [1498] , 23 mars 1984 & JP 58 211917 A (NISSAN JIDOSHA), 9 décembre 1983,

## Description

La présente invention concerne un système pour assurer l'étanchéité entre un vitrage mobile et un élément fixe, notamment entre un vitrage coulissant et le cadre dans lequel il se met en place en position fermée.

Dans le domaine de l'automobile, l'invention s'applique à l'étanchéité de vitres coulissantes, notamment de vitres latérales mobiles par coulissement horizontal. Un cas particulier est celui où le vitrage coulissant fait partie d'une surface vitrée et l'invention résout le problème de l'étanchéité du contact entre le vitrage mobile et le vitrage fixe en position fermée.

Dans un souci d'aérodynamisme et d'esthétisme, il est souhaitable que la surface extérieure de la carrosserie soit la plus uniforme possible une fois le vitrage fermé. A cet effet, on tend à imiter la présence d'éléments saillants susceptibles d'aménager la zone périphérique du vitrage mobile et l'on préfère que la partie mobile soit affleurante par rapport à l'élément fixe. La fermeture du vitrage mobile, se faisant par venue en butée de ce dernier chant contre chant sur l'élément fixe, pose un problème d'étanchéité particulier.

Une solution connue, mise en oeuvre dans le cas de toits ouvrants vitrés, a consisté à disposer sur le chant du vitrage mobile, par collage ou par liaison mécanique, un joint compressible qui vient se plaquer contre le chant de l'élément fixe en position de fermeture.

On connaît par le document DE-C-38 40 491 un système pour assurer l'étanchéité entre un vitrage mobile et un élément fixe présentant en position fermée deux surfaces en regard, l'ensemble délimitant ainsi un espace intérieur et un espace extérieur, comprenant un joint extrudé creux disposé sur le chant ou la zone marginale interne de l'un ou l'autre du vitrage mobile et de l'élément fixe, et venant se plaquer contre la surface en regard en position fermée.

On connaît par ailleurs par le document JP-A-211 917/83 un système déflecteur pour un toit ouvrant de véhicule automobile mais non coulissant, comprenant un panneau mobile dans une ouverture ménagée dans la carrosserie du véhicule.

Enfin, le document US-A-4 736 981 s'intéresse à des lèvres d'étanchéité dont sont munies chacune des deux parties bordant chacune une portière de véhicule et destinées à habiller montant.

Les joints collés présentent l'inconvénient d'un remplacement malaisé, le retrait du joint laissant des traces de colle qui doivent être éliminées avant la mise en place d'un nouveau joint.

La fixation par liaison mécanique peut être obtenue avec des joints dont la section présente une forme en queue d'aronde, par emboîtement du profil de queue d'aronde dans une gorge complémentaire aménagée sur le chant du vitrage, par exemple au moyen d'un profilé en matière plastique. Cette variante permet le repositionnement du joint, mais procure cependant encore une résistance médiocre à la pression extérieure. Il en résulte des défauts d'étanchéité et d'inviolabilité, comme dans la variante à joint collé.

En effet, lorsque l'on applique une pression importante sur le joint dans une direction transversale par rapport au vitrage, par exemple lors d'un nettoyage au jet d'eau sous pression, le joint a tendance d'une part à se déformer en réduisant la surface de contact avec l'élément fixe, éventuellement jusqu'à la rupture du contact, et d'autre part à se décoller où à se déchausser du côté du vitrage mobile sous l'effet de la contrainte appliquée.

L'invention a pour but de fournir un système d'étanchéité amélioré qui soit en particulier compatible avec l'utilisation de nettoyeurs haute pression.

En particulier, ce système devrait pouvoir être maintenu solidement en place entre les éléments en position fermée, tout en étant démontable et repositionnable aisément en cas de réparation.

Ce but, ainsi que d'autres qui apparaîtront par la suite, est atteint par l'invention selon les revendications. Il est connu de DE-C-3840491, un système pour assurer l'étanchéité entre un vitrage mobile et un élément fixe-présentant en position fermée deux surfaces en regard, l'ensemble délimitant ainsi un espace intérieur et un espace extérieur, comprenant un joint extrudé creux disposé sur le chant ou la zone marginale interne de l'un ou l'autre du vitrage mobile et de l'élément fixe, et venant se plaquer contre la surface en regard en position fermée.

Le système selon l'invention est en fait adapté pour assurer l'étanchéité entre deux éléments en mouvement relatif entre une position ouverte et une position fermée. Pour plus de clarté, on se placera dans un référentiel attaché à l'un des deux éléments et l'on considérera donc le vitrage mobile par rapport à cet élément dit fixe.

Le système selon l'invention comprend l'interposition entre le chant du vitrage mobile et le vitrage fixe d'un joint creux compressible qui épouse les deux surfaces en regard de ces derniers et qui vient en outre au contact d'une surface de soutien dans l'espace intérieur. Cette surface peut être en soi une surface d'étanchéité, c'est-à-dire qu'elle prolonge le contact entre le joint et l'élément en regard, mais peut aussi être distincte de la surface de contact étanche exerçant une influence indirecte sur l'étanchéité en raison de sa disposition relativement à cette dernière surface.

Ces deux configurations entraînent de multiples effets avantageux. Lors de la fermeture du vitrage, le joint se déforme sous l'effet de la compression et vient exercer une action contre la surface d'appui intérieur. Il en résulte une force de réaction dirigée vers l'extérieur du vitrage, dont la composante normale au vitrage s'oppose aux pressions extérieures pour plus d'étanchéité.

De même, l'application d'une pression extérieure renforce le contact avec la surface d'appui et produit une contre-réaction s'opposant à cette pression. Selon la disposition de la surface d'appui, cette force de réaction sera transmise au joint, provoquant une déformation de ce dernier dans un sens tendant à accroître la surface de contact avec la surface en regard sur l'élément fixe ou sur le vitrage, avec cette fois un effet indirect sur l'étanchéité.

Par ailleurs, la présence de surfaces d'appui dans l'espace intérieur limite le déplacement du joint en direction de l'intérieur et réduit le risque de séparation du joint du support sur lequel il est fixé.

Le système d'étanchéité selon l'invention est adapté à tous types de vitrage, portant éventuellement une couche superficielle rapportée, notamment une couche opaque.

Le joint creux et la surface d'appui peuvent être disposés chacun indifféremment sur le vitrage mobile ou sur le vitrage fixe. Le choix de l'emplacement de chaque partie du système est donc très libre et répondra dans chaque cas particulier à des impératifs divers liés notamment à l'esthétique de l'ensemble ou au déplacement du vitrage.

Suivant les besoins, ce système d'étanchéité sera monté sur tout le pourtour du vitrage mobile et de la partie complémentaire du vitrage fixe, ou bien sur une partie seulement de ces pourtours, l'étanchéité étant réalisée sur les parties restantes par un ou des systèmes d'un autre type.

Pour les éléments du système qui doivent être fixés sur un vitrage, l'invention trouvera des formes de réalisation très variées. On pourra avantageusement utiliser des techniques d'extrusion ou d'encapsulation de matières adhésives directement sur le verre, qui fournissent des assemblages très solides.

Ainsi, suivant des formes de réalisation de l'invention :
- les moyens de soutien intérieur comprennent un élément profilé disposé sur la surface en regard du joint creux et présentant une lèvre inclinée s'étendant vers ledit espace intérieur ;
- la lèvre présente une forme épousant au moins partiellement la portion du profil du joint creux tournée vers l'espace intérieur ;
- le joint est pourvu d'une lèvre longitudinale pointant vers l'espace extérieur et venant en appui avec la surface en regard en position fermée ;
- lesdits moyens de soutien intérieur sont solidaires du joint creux ;
- lesdits moyens comprennent une série de bagues solidaires du joint creux et possédant une section d'extrémité en appui sur la portion du joint tournée vers l'espace intérieur ;
- lesdits moyens comprennent une bande ou un cadre profilé dont une aile vient en appui longitudinal continu ou discontinu sur la portion du joint tournée vers l'espace intérieur ;
- le joint creux est au moins partiellement floqué sur sa surface externe ;
- le joint creux est fixé sur le vitrage ou le vitrage fixe au moyen d'un profilé qui s'étend sur au moins une partie de la zone marginale interne du vitrage ou de l'élément fixe, respectivement, qui présente une section transversale adaptée pour recevoir un côté du joint creux, et d'attaches empêchant tout mouvement du joint par rapport au profilé dans la direction transversale à la surface de ladite zone marginale interne.

La fixation du joint creux par des attaches transversales, qui peut d'ailleurs s'appliquer à d'autres systèmes d'étanchéité et n'est nullement limitée aux systèmes pourvus de moyens de soutien intérieur, permet de réduire voire d'éliminer les risques d'arrachage du joint sous l'effet de pressions extérieures importantes.

En complément des moyens de soutien intérieur, ces attaches contribuent à réduire les possibilités de déplacement du joint transversalement au vitrage et renforcent l'étanchéité.

Suivant encore d'autre formes de réalisation de l'invention :
- le joint comporte sur le côté reçu dans le profilé une rainure longitudinale ouverte vers l'espace intérieur, le profilé comporte des perçages en regard avec ladite rainure et les attaches sont des clips de longueur adaptée, insérés dans la rainure au travers des perçages ;
- lesdites attaches sont portées par une baguette ou un cadre profilé ;
- le profilé est formé d'une matière adhérant au vitrage ou au vitrage fixe déposée par extrusion ou encapsulation directement sur ce dernier ;
- le profilé est collé sur le vitrage ou l'élément fixe sous forme d'une bande profilée préfaçonnée.

D'autres avantages et particularités de l'invention apparaîtront à la lumière de la description détaillée qui va suivre, faite en regard des dessins annexés, sur lesquels :
- La figure 1 : représente une vue en coupe transversale d'un premier système non conforme à l'invention ;
- La figure 2 : illustre l'assemblage d'une partie du système représenté sur la figure 1 ;
- La figure 3 : représente une vue en coupe transversale d'un système conforme à l'invention ;
- La figure 4 : représente une vue en perspective d'un élément du système représenté sur la figure 3 ;
- La figure 5 : représente une vue en coupe transversale d'une partie d'un troisième système non conforme à l'invention, en pièces détachées et à l'état fini.

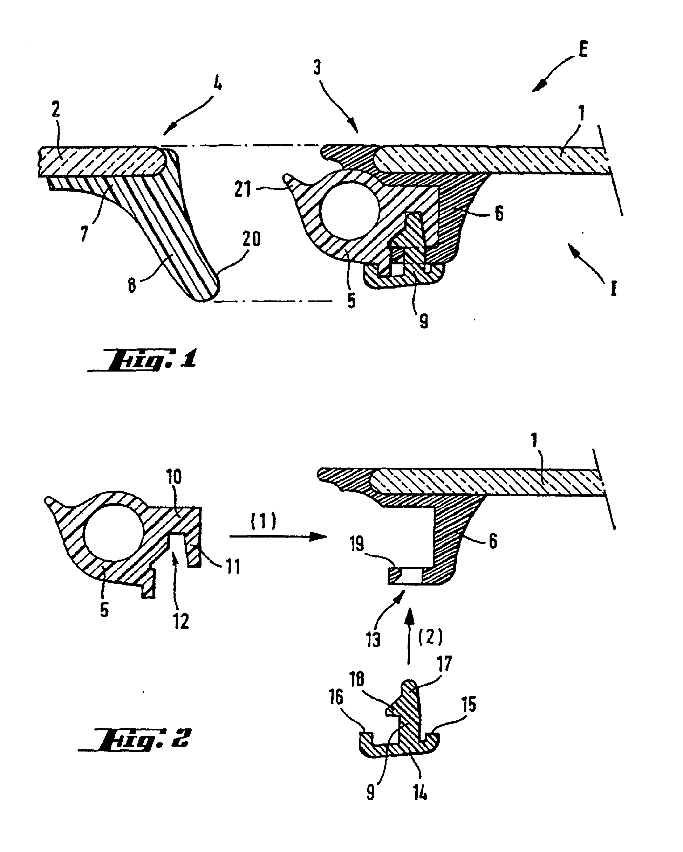

Le système représenté sur la figure 1 est destiné à assurer l'étanchéité entre un vitrage mobile 1 et un vitrage fixe 2, dans un dispositif à vitre coulissante qui peut être un vitrage latéral d'automobile. Ce dispositif comporte également des moyens non représentés pour déplacer le vitrage mobile par rapport à l'élément fixe, tels que par exemple des rails de guidage.

Le mouvement du vitrage mobile 1 peut consister en un simple coulissement parallèlement au vitrage fixe 2.

Dans ce cas, le système sera plus particulièrement adapté pour résoudre le problème d'étanchéité sur le côté du vitrage mobile 1 qui vient en butée au terme de sa course contre l'élément fixe 2. Le joint creux sera donc disposé sur un côté du vitrage mobile 1 ou de l'élément fixe 2, et des systèmes d'étanchéité complémentaires seront prévus sur les autres côtés.

Suivant un autre mode de réalisation, le vitrage mobile 1 vient s'encastrer dans une fenêtre de dimensions correspondantes aménagée dans l'élément fixe 2. La mise en place du vitrage mobile peut se faire en deux temps : un coulissement dans un plan parallèle à l'élément fixe jusqu'à une position en regard de la fenêtre, puis un déplacement transversal pour amener le vitrage mobile dans le plan de l'élément fixe. Le système est dans ce cas adapté pour assurer l'étanchéité sur tous les côtés du vitrage mobile. On fera alors courir le joint sur tout le pourtour du vitrage mobile 1 de la fenêtre prévue dans l'élément fixe 2.

Sur la figure 1, les vitrages sont représentés en position (relative) ouverte. En l'absence d'un système d'étanchéité, la fermeture se ferait par mise en contact des surfaces 3 et 4 en regard sur le vitrage mobile et sur le vitrage fixe, respectivement, délimitant ainsi un espace intérieur I et un espace extérieur E.

Le système a pour fonction de rendre la position fermée étanche et comporte à cet effet un joint extrudé creux 5 fixé sur un profilé 6 s'étendant sur le bord de la face du vitrage mobile 1 dirigée vers l'espace intérieur I, ou face interne, et, en tant que moyen de soutien intérieur, un profilé 7 monté sur le vitrage fixe 2, présentant une lèvre 8 inclinée par rapport au plan du vitrage et s'étendant vers l'espace intérieur I.

Le joint 5 peut être constitué d'une matière déformable quelconque, notamment d'un matériau élastomère.

Un joint pourvu d'un flocage au moins partiel sur sa surface externe se révèle très avantageux pour l'étanchéité du système.

Le profilé 6 peut être formé de tout matériau connu en soi, notamment un matériau polymère, avantageusement plus rigide que le matériau constitutif du joint 5 pour une fixation résistante au vitrage.

De même, le matériau du profilé 7 sera avantageusement choisi parmi les matériaux plus rigides que le matériau constitutif du joint 5 de façon à résister au placage du joint en position fermée. Toutefois une certaine déformation plastique pourra être tolérée pourvu que le profilé oppose une résistance au contact du joint.

Le profilé 6 et le profilé 7 sont réalisés de façon connue en soi, soit en préfaçonnant une bande profilée que l'on colle sur le support au moyen d'un adhésif adéquat, soit par mise en forme directement sur le support d'une matière adhérant à ce dernier et durcissant jusqu'à la consistance finale désirée. Avantageusement, les profilés sont extrudés le long de la zone marginale interne du support et/ou du chant de ce dernier, ou viennent encapsuler la zone marginale interne du support et/ou le chant de ce dernier. Un matériau de type polyuréthane se prête fort bien à ces techniques.

Le joint 5 est maintenu en place dans le profilé 6 au moyen d'attaches 9 de la façon suivante, illustrée sur la figure 2.

Le profilé 6 présente une section essentiellement en U dont la concavité est tournée vers la bordure du vitrage. Cette section est adaptée pour recevoir une forme saillante complémentaire prévue sur le joint extrudé 5. Cette saillie présente une section en forme de L formée par deux ailes 10 et 11.

Les ailes 10 et 11 définissent d'autre part avec le corps creux du joint 5 une rainure longitudinale 12.

La mise en place du joint 5 dans le profilé 6 se fait suivant la flèche (1) en plaquant les ailes 10 et 11 respectivement sur un bord et sur le fond de la gorge en U du profilé 6, la rainure longitudinale 12 du joint 5 étant tournée vers l'espace intérieur 1.

Le profilé 6 est pourvu de perçages 13 en regard avec la rainure 12.

L'attache 9 est un clips comportant une tête 14 pourvue de deux ailes 15 et 16 et un ergot 17 muni d'une saillie latérale 18. La forme de l'ergot 17 est telle qu'il peut s'engager dans la rainure 12 au travers d'un perçage 13 en exerçant une force sur la tête 14 suivant la flèche (2), la saillie venant se placer à l'intérieur de la rainure 12 en butée sur le bord intérieur 19 de la gorge en U du profilé 6.

Ce faisant, les deux ailes 15 et 16 viennent se mettre en appui respectivement sur le profilé 6 et le corps du joint 5.

La présence de l'ergot 17 empêche le mouvement du joint parallèlement au vitrage 1, alors que la saillie 18 et l'aile 15 en butée sur le profilé 6 empêchent tout mouvement du joint perpendiculairement au vitrage 1.

On réalise ainsi une fixation très solide du joint 5 sur le vitrage 1. Le démontage du joint, par exemple pour son remplacement, n'est pas moins aisé pour autant. Il suffit de retirer l'attache 9, en prévoyant une position d'escamotage ou bien par rupture de l'ergot 17, pour dégager le joint, la remise en place se faisant en introduisant l'attache ou une nouvelle attache dans le perçage 13.

Les perçages 13 peuvent être réalisés de place en place le long du profilé sur une longueur variable comme on le verra par la suite.

En position fermée, le contact étanche entre le vitrage mobile et le vitrage fixe représentés sur la figure 1 se fait par placage du joint 5 sur la lèvre 8, accompagné d'une déformation éventuelle du joint en fonction de la pression appliquée lors de la fermeture.

La pointe 20 de la lèvre vient se placer à proximité de l'attache 9, de sorte que la lèvre 8 offre une surface d'appui importante pour la portion de joint opposée au vitrage.

Lorsqu'on applique une pression extérieure sur le joint 5, par exemple lors de l'utilisation d'un nettoyeur à eau à haute pression dont le jet peut atteindre 80 bars de pression, la lèvre 8 exerce sous l'action du joint une force de réaction sur le corps creux du joint qui garantit l'étanchéité du système. L'attache 9 évite les risques liés au déchaussage du joint et contribue à la résistance de l'ensemble en limitant le déplacement du joint dans la direction transversale au vitrage.

Pour renforcer encore l'étanchéité du système, le joint 5 est muni d'une lèvre longitudinale 21 pointant vers l'espace extérieur E et venant en appui avec la surface du profilé 7 sur l'élément fixe.

Sous l'effet de la pression extérieure, cette lèvre se plaque contre le profilé 7 et détourne l'eau ou l'air sous pression vers l'extérieur au lieu de l'interface de contact entre le joint 5 et la lèvre 8.

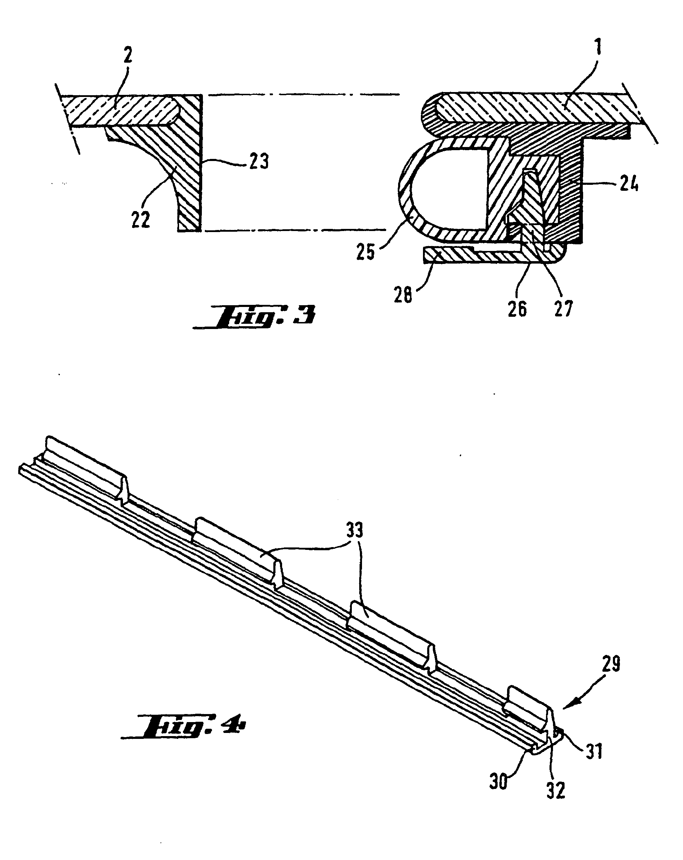

La figure 3 représente un système selon l'invention dans lequel les moyens de soutien intérieur jouent un rôle indirect dans l'obtention de l'étanchéité.

Le vitrage fixe 2 est pourvu d'un profilé 22 s'étendant sur la zone marginale interne du vitrage et comprenant une aile 23 à angle droit par rapport au vitrage 2.

La surface d'appui intérieur est prévue cette fois sur le vitrage mobile 1. Ce dernier porte un profilé 24 sensiblement identique au profilé 6 décrit précédemment présentant la même section en forme de U et dans lequel vient s'insérer un joint creux 25 grâce à une forme complémentaire en L.

La fixation du joint est assurée par une attache 26 au moyen d'un ergot 27 identique à celui précédemment décrit. L'attache 26 assure également le soutien intérieur du joint 25 grâce à une aile 28, plus longue que l'aile 16 de l'attache 9, et qui présente une surface en appui contre le corps creux du joint 25 dans la zone de compression du joint.

En position fermée, le joint 25 se plaque contre l'aile 23 du profilé 22 sur le vitrage fixe. Par déformation, le joint vient exercer une pression sur la surface de l'aile 28 en contact avec lui, provoquant une réaction. A cet égard,il est préférable que le matériau constitutif de l'attache 26 soit suffisamment rigide pour supporter la pression exercée par le joint.

Lorsqu'on applique une pression extérieure sur le joint 25 de ce système en position fermée, le corps creux du joint se déforme et exerce une pression plus forte sur l'aile 28. Sous l'effet de la résistance de l'aile 28, le joint a tendance à se déformer en direction de l'espace libre entre les ailes 23 et 28. Ce faisant, la surface du joint 25 vient se plaquer encore plus sur l'aile 23. La surface d'étanchéité est ainsi augmentée de par la présence de la surface d'appui.

Les deux types de moyens de soutien intérieur décrits en référence aux figures 1 et 3 peuvent être combinés dans un seul et même système, si les conditions l'exigent.

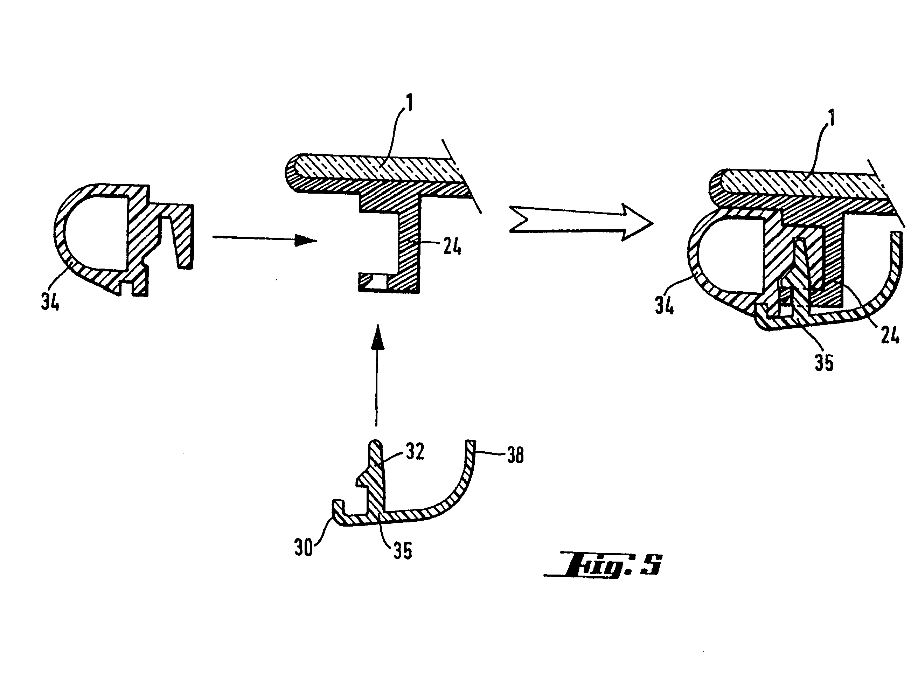

Les figures 4 et 5 concernent plus particulièrement des modes de réalisation des attaches permettant de fixer le joint sur son support.

Dans les modes de réalisation précédents, les attaches 9 et 26 font partie d'une série d'attaches identiques disposées de place en place le long du joint creux.

En variante à ces attaches indépendantes, on présente sur la figure 4 une barrette profilée, dont la section est sensiblement en forme de E. Par rapport à l'attache 9 précédemment décrite, les deux branches extrêmes 30 et 31 sont analogues aux ailes 15 et 16. La branche centrale 32 porte des éléments équidistants 33 jouant le rôle de l'ergot 17.

Pour mettre en place cette barrette dans un profilé tel que les profilés 6 et 24, il convient d'aménager sur ces derniers des fenêtres équidistantes adaptées aux dimensions des éléments 33.

La barrette pourra prendre la forme d'un cadre lorsque le joint est prévu sur tout le pourtour du vitrage.

En variante, il est possible de fixer des attaches telles que les attaches 9 sur une barrette ou un cadre profilé de géométrie plus simple.

De telles barrettes ou cadres d'attache peuvent présenter un caractère décoratif en tant que cache-joint.

C'est le cas du système de fixation de joint représenté sur la figure 5 qui comprend un profilé 24 déjà décrit, un joint 34 sensiblement identique au joint 25 déjà décrit et une barrette profilée 35 identique à la barrette 29 à ceci près que l'aile 31 est remplacée par une aile 38 plus longue qui recouvre entièrement le profilé 24 après mise en place de la barrette.

Les attaches, qu'elles soient indépendantes ou portées par une barrette ou un cadre profilé, peuvent en outre être avantageusement utilisées comme support pour des accessoires variés.

## Revendications

1. Système pour assurer l'étanchéité entre un vitrage mobile (1) coulissant et un vitrage fixe (2) présentant en position fermée deux surfaces en regard, l'ensemble délimitant ainsi un espace intérieur (I) et un espace extérieur (E), comprenant un joint extrudé creux (25 ; 34) disposé sur le chant ou la zone marginale interne de l'un ou l'autre du vitrage mobile et du vitrage fixe, et venant se plaquer contre la surface en regard en position fermée, **caractérisé en ce qu'**il comprend des moyens de soutien intérieur (26) présentant au moins une surface d'appui (28) parallèle ou inclinée par rapport au plan du vitrage, en contact en position fermée avec la portion du joint qui est tournée vers l'espace intérieur lorsque le vitrage mobile et le vitrage fixe sont en position ouverte, l'application d'une pression extérieure renforçant le contact avec la surface d'appui et produisant une contre-réaction, provoquant une déformation du joint creux (25 ; 34) dans un sens tendant à accroître la surface de contact avec la surface en regard sur le vitrage fixe ou sur le vitrage mobile, et **en ce que** lesdits moyens de soutien intérieur (26) sont solidaires du joint creux (25).

2. Système selon la revendication 1, **caractérisé en ce qu'**il s'étend sur au moins une partie du pourtour du vitrage mobile (1) d'une part et du vitrage fixe (2) d'autre part.

3. Système selon la revendication 1, **caractérisé en ce que** lesdits moyens comprennent une série de bagues solidaires du joint creux (25) et possédant une section d'extrémité (28) en appui sur la portion du joint tournée vers l'espace intérieur.

4. Système selon la revendication 1, **caractérisé en ce que** lesdits moyens comprennent une bande ou un cadre profilé (32) dont une aile vient en appui longitudinal continu ou discontinu sur la portion du joint (25) tournée vers l'espace intérieur.

5. Système selon l'une quelconque des revendications précédentes, **caractérisé en ce que** le joint creux est au moins partiellement floqué sur sa surface externe.

6. Système selon l'une quelconque des revendications précédentes, **caractérisé en ce que** le joint creux (25 ; 34) est fixé sur le vitrage mobile ou le vitrage fixe au moyen d'un profilé (24) qui s'étend sur au moins une partie de la zone marginale interne du vitrage mobile ou du vitrage fixe, respectivement, qui présente une section transversale adaptée pour recevoir au moins un côté (11, 12) du joint creux (25), et d'attaches empêchant tout mouvement du joint par rapport au profilé dans la direction transversale à la surface de ladite zone marginale interne.

7. Système selon la revendication 6, **caractérisé en ce que** le joint comporte sur le côté reçu dans le profilé une rainure longitudinale (12) ouverte vers l'espace intérieur, le profilé comporte des perçages (13) en regard avec ladite rainure et les attaches sont des clips de longueur adaptée, insérés dans la rainure au travers des perçages.

8. Système selon la revendication 6 ou 7, **caractérisé en ce que** lesdites attaches sont portées par une baguette ou un cadre profilé (32).

9. Système selon l'une quelconque des revendications 6 à 7, **caractérisé en ce que** le profilé est formé d'une matière adhérant au vitrage mobile ou au vitrage fixe déposé par extrusion ou encapsulation directement sur ce dernier.

10. Système selon l'une quelconque des revendications 6 à 7, **caractérisé en ce que** le profilé est collé sur le vitrage mobile ou le vitrage fixe sous forme d'une bande profilée préfaçonnée.

## Claims

1. System for ensuring sealing between a mobile glazing (1) and a fixed glazing (2) having in the closed position two facing surfaces, the assembly thus defining an internal space (I) and an external space (E), comprising a hollow extruded joint (25, 34) placed on the edge or the internal marginal zone of either the mobile glazing or the fixed glazing and engaging with the facing surface in the closed position, **characterized in that** it comprises internal support means (26) having at least one bearing surface (28) parallel or inclined with respect to the plane of the glazing and in contact with the portion of the joint turned towards the internal space in the closed position when the mobile glazing and the fixed glazing are in open position, the application of an external pressure reinforcing the contact with the bearing surface and conducting to a counter reaction, bringing about a deformation of the hollow joint (25, 34) in a sense tending to increase the contact surface with the facing surface on the fixed glazing or on the mobile glazing, and **in that** said internal support means (26) are integral with the hollow joint (25).

2. System according to claim 1, **characterized in that** it extends over at least part of the periphery of the mobile glazing (1) on the one hand and the fixed glazing (2) on the other.

3. System according to claim 1, **characterized in that** said means comprise a series of rings integral with the hollow joint (25) and having an end section (28) bearing on the portion of the joint turned towards the internal space.

4. System according to claim 1, **characterized in that** said means comprise a strip or a profiled frame (32), whereof a wing bears in a continuous or discontinuous longitudinal manner on the portion of the joint (25) turned towards the internal space.

5. System according to any one of the preceding claims, **characterized in that** the hollow joint is at least partly flocked on its external surface.

6. System according to any one of the preceding claims, **characterized in that** the hollow joint (25, 34) is fixed to the glazing or the fixed element by means of a section (24) extending over at least part of the internal marginal zone of the glazing or the fixed element respectively, which has a cross-section adapted to receive at least one side (11, 12) of the hollow joint (25), and fasteners preventing any movement of the joint with respect to the section in the transverse direction to the surface of said internal marginal zone.

7. System according to claim 6, **characterized in that** on the side received in the section, the joint has a longitudinal slot (12) open towards the internal space, the section having openings (13) facing said slot and the fasteners are clips having an adapted length and inserted in the slot through the openings.

8. System according to claim 6 or 7, **characterized in that** said fasteners are carried by a rod or a profiled frame (32).

9. System according to any one of the claims 6 to 7, **characterized in that** the section is formed from a material adhering to the glazing or to the fixed element deposited directly on the latter by extrusion or encapsulation.

10. System according to any one of the claims 6 to 7, **characterized in that** the section is bonded to the glazing or the fixed element in the form of a preshaped, profiled strip.

## Patentansprüche

1. System zur Sicherstellung der Dichtheit zwischen einer mobilen hin und her beweglichen Verglasung (1) und einer feststehenden Verglasung (2), das in geschlossener Position zwei einander gegenüberliegende Flächen aufweist, wodurch ein Innenraum (I) und ein Außenraum (E) begrenzt wird, mit einer extrudierten Hohldichtung (25, 34), die auf der Kante oder dem inneren Randbereich der beweglichen Verglasung oder dem feststehenden Element angeordnet ist und sich in geschlossener Position an die gegenüberliegende Fläche andrückt, **dadurch gekennzeichnet, dass** es innere Abstützungsmittel (26) umfasst, die mindestens eine Auflagefläche (28) aufweisen, die zur Ebene der Verglasung parallel oder geneigt ist und sich in geschlossener Position mit dem Teil der Dichtung in Berührung befindet, der zum Innenraum gerichtet ist, wenn die bewegliche und feststehende Verglasung sich in offener Position befinden, wobei durch das Ausüben eines äußeren Drucks der Kontakt mit der Auflagefläche verstärkt und eine Gegenreaktion hervorgerufen wird, die eine Verformung der hohlen Dichtung (25; 34) in einer Richtung verursacht, die dazu führt, die Kontaktfläche mit der gegenüber liegenden Fläche auf der feststehenden Verglasung oder der beweglichen Verglasung zu vergrößern, und dass die inneren Abstützungsmittel (26) mit der Hohldichtung (5) fest verbunden sind.

2. System nach Anspruch 1, **dadurch gekennzeichnet, dass** es sich über mindestens einen Teil des Umfangs der beweglichen Verglasung (1) einerseits und des feststehenden Elements (2) andererseits erstreckt.

3. System nach Anspruch 1, **dadurch gekennzeichnet, dass** die Mittel eine Reihe von Ringen umfassen, die mit der Hohldichtung (25) fest verbunden sind und einen Endabschnitt (28) besitzen, der auf dem zum Innenraum zeigenden Teil der Dichtung aufliegt.

4. System nach Anspruch 1, **dadurch gekennzeichnet, dass** die Mittel ein Band oder einen Profilrahmen (32) umfassen, wovon ein Schenkel ununterbrochen oder unterbrochen längs auf dem zum Innenraum zeigenden Teil der Dichtung (25) aufliegt.

5. System nach einem der vorhergehenden Ansprüche, **dadurch gekennzeichnet, dass** die Hohldichtung auf der Außenseite wenigstens teilweise beflockt ist.

6. System nach einem der vorhergehenden Ansprüche, **dadurch gekennzeichnet, dass** die Hohldichtung (25, 34) an der Verglasung oder der feststehenden Verglasung mittels eines Profils (24) befestigt ist, das sich über wenigstens einen Teil des inneren Randbereichs der Verglasung bzw. der feststehenden Verglasung erstreckt und einen Querschnitt, der geeignet ist, mindestens eine Seite (11, 12) der Hohldichtung (25) aufzunehmen, und Verbindungselemente aufweist, die eine Bewegung der Dichtung in Bezug auf das Profil in der quer zur Oberfläche des inneren Randbereichs verlaufenden Richtung verhindern.

7. System nach Anspruch 6, **dadurch gekennzeichnet, dass** die Dichtung auf der vom Profil aufgenommenen Seite eine zum Innenraum offene Längsnut (12) umfasst, wobei das Profil dieser Nut gegenüberliegende Bohrungen (13) enthält, und die Verbindungselemente geeignet lange Klemmen sind, die durch die Bohrungen in die Nut gesteckt werden.

8. System nach Anspruch 6 oder 7, **dadurch gekennzeichnet, dass** die Verbindungselemente von einer Leiste oder einem Profilrahmen (32) getragen werden.

9. System nach einem der Ansprüche 6 bis 7, **dadurch gekennzeichnet, dass** das Profil aus einem Material gebildet ist, das an der Verglasung oder an der feststehenden Verglasung anhaftet und durch Extrudieren oder Ummanteln direkt auf dieser/diesem aufgebracht worden ist.

10. System nach einem der Ansprüche 6 bis 7, **dadurch gekennzeichnet, dass** das Profil in Form eines vorgeformten Profilbandes auf die Verglasung oder die feststehende Verglasung geklebt ist.
